# EUROPEAN PATENT SPECIFICATION

(11) **EP 3 087 125 B1**
(45) Date of publication and mention of the grant of the patent: **25.11.2020**
(21) Application number: 14816275.3
(22) Date of filing: 19.12.2014
(51) Int. Cl.: C08J 9/00, C08K 3/04, C08K 3/32, C08K 3/36, C08L 25/04, C08J 9/14, C08J 9/18, C08J 9/20

(54) **COMBINATION OF A MINERAL COMPONENT WITH CARBON BLACK AND ITS USE FOR DECREASING THE THERMAL CONDUCTIVITY OF VINYL AROMATIC POLYMER**
KOMBINATION AUS EINER MINERALISCHEN KOMPONENTE MIT RUSS UND DEREN VERWENDUNG ZUR SENKUNG DER WÄRMELEITFÄHIGKEIT VON AROMATISCHEM VINYLPOLYMER
COMBINAISON D'UN CONSTITUANT MINÉRAL AVEC DU NOIR DE CARBONE ET SON UTILISATION POUR DIMINUER LA CONDUCTIVITÉ THERMIQUE DE POLYMÈRE AROMATIQUE DE VINYLE

(30) Priority: 27.12.2013 EP 13461565
(43) Date of publication of application: 02.11.2016
(73) Proprietor: Synthos Dwory 7 Spolka z ograniczona odpowiedzialnoscia spolka jawna, 32-600 Oswiecim (PL)
(72) Inventor: KONDRATOWICZ, Filip Lukasz, PL-30-382 Kraków (PL); MIKOSZEK, Marzena, PL-41-707 Ruda Slaska (PL); KOZUCH, Karol, PL-43-190 Mikolów (PL); UTRATA, Kamil, PL-43-229 Pszczyna (PL); CHYLASZEK, Marcin, PL-32-650 Witkowice (PL); ROGOZA, Jaroslaw, PL-55-093 Kielczów (PL)
(74) Representative: Eisenführ Speiser
(86) International application number: PCT/EP2014/078896
(87) International publication number: WO 2015/097106

(56) References cited:
- WO-A1-2012/032022
- WO-A2-2008/061678

## Description

The present invention relates to the use of a combination of a) a mineral component containing calcium phosphate (and optionally silica) and b) carbon black, for decreasing the thermal conductivity of foamed vinyl aromatic polymer. The invention also relates to processes for the preparation of expandable polymer granulate, the expandable polymer granulate, and polymer foam made from such granulate. The invention further relates to a compounded masterbatch comprising a) and b).

It is generally known that the addition of athermanous fillers (such as carbon black or graphite, or minerals from the group of silicas) decreases the thermal conductivity of polymers. Examples for such types of polymers are those obtained by polymerization of vinyl aromatic monomers (in particular of styrene) and optionally comonomers. Other examples for such type of polymers are those obtained by extrusion of polystyrene and its copolymers. Typically, fillers that can absorb infrared radiation are added.

Vinyl aromatic polymers are known and used for the preparation of expanded products that are adopted in various applications, among which the most important one is for thermal insulation. This is why there is a continuously increasing demand for expanded vinyl aromatic polymers with both low thermal conductivity and good dimensional stability.

International patent application WO 2006/058733 A1 teaches expandable styrene polymer granulates containing a) filler selected from the group of inorganic powder materials such as silicic acid and b) carbon black or graphite.

International patent application WO 2004/087798 A1 teaches expandable vinyl aromatic polymers comprising, in a polymer matrix, a type of carbon black having an active surface area ranging from 5 to 40 m²/g. The thermal conductivity of a material with a density of 14 g/l is reported to be 36.5 mW/m*K.

International patent application WO 2006/061571 A1 teaches an expandable polystyrene composition comprising carbon black having a BET surface, as measured according to ASTM D 6556, ranging from 550 to 1,600 m²/g. The examples report polystyrene foam with a thermal conductivity of 36.16 mW/m*K at density 13.3 g/l according to ASTM D 1622, and 34.21 mW/m*K at density 19.4 g/l, respectively.

International patent application WO 2008/061678 A2 teaches the use of carbon black having a specific electrical conductivity, to reduce the thermal conductivity of polystyrene foam. The examples report polystyrene foam having a thermal conductivity of 31.0 mW/m*K at a density of 17 g/l. It further teaches the presence of inorganic salts of phosphoric acid and anionic surfactants as suspending agents, but does not disclose that a certain type of calcium phosphate, together with a certain type of carbon black, decreases the thermal conductivity of foams prepared from polymer based on vinyl aromatic monomer.

WO 2012/032022 A1 discloses EPS containing specific carbon black powders. In Example 1, talc having a mean diameter of 10.5 µm is used as a cell regulator. However, talc is a crystalline mineral and may affect the nucleation process and cell size uniformity; its presence is therefore undesirable in some applications.

One of the solutions to decrease the thermal conductivity of expanded vinyl polymers or copolymers is the addition thereto of fillers that absorb infrared radiation (so-called athermanous fillers). However, the presence of athermanous fillers, particularly various types of carbon black, may lead to a deterioration of flammability and of mechanical properties of the polymer foam. It is commonly known that foams prepared from vinyl aromatic polymers and copolymers comprising carbon-based athermanous fillers have worse self-extinguishing properties, and consequently a higher concentration of flame retardant must be used to achieve suitable performance for passing DIN 4102 (B1, B2). Further, when using carbon black types with highly developed active surface, such as a BET surface of above 40 m²/g, the self-extinguishing properties are such that it is even not possible to achieve DIN 4102 (B1, B2).

On the other hand, the presence of small amounts of athermanous minerals, such as silica types and calcium phosphates, do not cause a deterioration of the polymer foam's flammability, but the decrease of thermal conductivity is not as pronounced as it is in case of carbon-based materials (carbon black and/or graphite).

Thus, the desired expanded polymer should contain carbon-based filler in an amount that maintains the foam's self-extinguishing and mechanical properties in the same range as in an expanded polymer without such filler, while at the same time the thermal conductivity of the foam should be decreased.

It has now surprisingly been found in accordance with the present invention that the co-use of
a) a specific amount of a certain type of calcium phosphate, and optionally a specific amount of a certain type of silica, and
b) a specific amount of a certain type of carbon black,
in a polymer based on one vinyl aromatic monomer (and optionally one or more comonomers),
decreases the thermal conductivity of foam prepared from a polymer based on a vinyl aromatic monomer and optionally one or more comonomers, without adversely affecting the foam's flammability and mechanical properties.

### Detailed description

In a first aspect, the invention relates to the use of a) a specific amount of a certain type of calcium phosphate, and optionally a specific amount of a certain type of silica, in combination with b) a specific amount of a certain type of carbon black, for decreasing the thermal conductivity of foams prepared from polymer based on vinyl aromatic monomer and optionally one or more comonomers.

### I) Polymer composition

The polymer used in accordance with the invention is based on one (or more) vinyl aromatic monomer(s), preferably styrene, and optionally one or more comonomers, i.e. it is a homopolymer or a copolymer. The polymer composition comprises, in addition to the polymer component, a) a mineral component and b) carbon black, and typically and preferably a variety of further additives, as set out below.

### Silica

The silica as used in accordance with the invention is amorphous and has the following specific properties:
(i) a BET surface, as measured according to the procedure explained below, in a range of from 3 to 80 m²/g and,
(ii) a particle size distribution within a range of from 3 nm to 1,000 nm.

The method to determine the silica's BET surface is based on the standards ASTM C1069 and ISO 9277 and is conducted as follows: in the first step, 2 to 5 g sample is dried at 105°C and placed in a desiccator for cooling and further degassing. Subsequently, 0.3 to 1.0 g of the dry material is weighed into a test tube and placed in the degassing unit for about 30 min. Afterwards, the sample is transferred to the measuring unit and is measured using the Micromeritics Tristar 3000 instrument.

The silica as used according to the invention preferably has a BET surface of from 5 to 70 m²/g, preferably 8 to 60 m²/g, such as 10 to 50 m²/g, in particular 15 to 40 m²/g, more preferably 20 to 30 m²/g, such as about 25 m²/g.

Moreover, the silica as used according to the present invention is defined as having a particle size distribution, as measured according to the procedure detailed below, of 3 nm to 1000 nm.

The method to determine the particle size distribution is conducted as follows: in the first step, 45 g of distilled water and 5 g of sample are placed into a beaker and stirred to allow the entire sample to be wetted. Subsequently, the sample is dispersed in an external ultrasonic probe for 5 min at 100 % amplitude. The measurement is performed automatically using the primary agglomerate program in a Malvern MasterSizer 2000 device.

It is preferred that the particle size distribution of the silica as used according to the present invention is within a range of 20 to 800 nm, preferably 30 to 600 nm, such as 40 to 400 nm.

According to the present invention, the silica, if present, is used in an amount of from 0.1 to less than 2 wt.%, based on the weight of the polymer. Preferably, the silica is spherically shaped silica.

It is most preferred that the silica a1) as used according to the present invention comprises the material Sidistar from ELKEM, and most preferred is that a1) is Sidistar T120.

### Calcium phosphate

As mentioned above, the calcium phosphate used according to the invention has a particle size, as measured by laser diffraction, of 0.1 µm to 20 µm. It is preferred that the particle size is from 1 µm to 18 µm, such as 2 µm to 15 µm.

The calcium phosphate as used in accordance with the invention is preferably tricalcium phosphate (specifically a type of hydroxyapatite).

According to the present invention, the calcium phosphate is used in an amount of from 0.1 to 10 wt.%, based on the weight of polymer.

According to one preferred embodiment of the present invention, the mineral component a) comprises the specific type of calcium phosphate. According to a second preferred embodiment of the present invention, the mineral component a) comprises both a1) the specific type of silica and a2) the specific type of calcium phosphate.

Moreover, it is not necessary in accordance with the present invention that the constituents of the combination, i.e. a2) the specific type of calcium phosphate (and optionally a1) the specific type of silica) and b), and the optional component c), are added at the same time. Instead, it is sufficient that a2), and optionally a1), and b), and the optional component c), are eventually present in the granulate (expandable polymer) or foam (expanded polymer).

According to the present invention, the total amount of component a), i.e. the sum of the amounts of a1) silica as specified (if present) and a2) calcium phosphate as specified, respectively, is 0.1 to less than 12 wt.% based on the weight of polymer. If both a1) the specific silica and a2) the specific calcium phosphate are present, then the minimum amount is 0.2 wt.% based on the weight of polymer.

### Carbon Black

The carbon black as used according to the invention has a BET surface, as measured according to ASTM 6556, of more than 40 to 250 m²/g.

It is preferred that the BET surface of the carbon black as used according to the invention is from 41 to 200 m²/g, preferably from 45 to 150 m²/g, in particular from 50 to 100 m²/g.

The sulphur content of the carbon black as used according to the invention is in the range of from 50 to 20,000 ppm, as measured according to ASTM D1619, preferably from 3,000 to 10,000.

The carbon black is used in an amount of 0.1 to 12 wt.%, based on the weight of the polymer.

In addition to the mandatory components a) and b) above, the materials according to the invention (the polymer composition, the granulate, and the foam) may contain further additives, as is set out below.

For instance, a flame retardant system may be present, which is usually a combination of two types of compounds, namely a brominated aliphatic, cycloaliphatic, aromatic or polymeric compound containing at least 50 wt.% of bromine, and a second compound (so called synergistic compound) which can be bicumyl (i.e. 2,3-dimethyl-2,3-diphenylbutane) or 2-hydroperoxy-2-methylpropane.

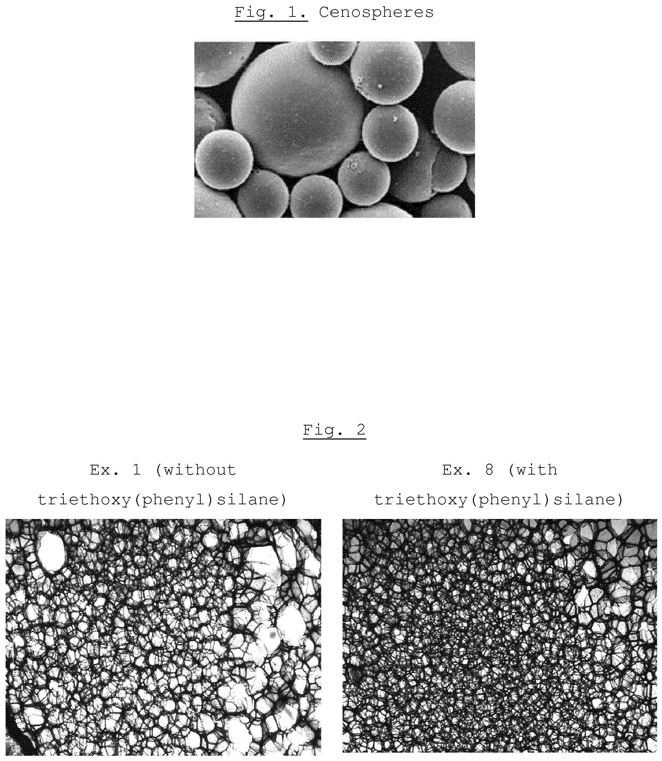

In a preferred embodiment of the present invention, the self-extinguishing properties are improved so as to achieve DIN 4102 (B1, B2), namely by using specific types of cenospheres as flame suppressors. These additives reduce flame development by creation of char, and the gases enclosed in the spherical particles furthermore work as fire annihilators. A micrograph of a typical cenosphere material is shown in Fig. 1.

Most preferably, and for a further reduction of the thermal conductivity of the polymer foams, the combination (of a) calcium phosphate, and optionally silica, and b) carbon black) further comprises c) nanoparticles of metal oxide, the nanoparticles having a 90% particle size of less than 100 nm (on the basis of a BET standard measurement), preferably a 90% particle size less than 50 nm.

In a preferred embodiment, the metal oxide is zinc oxide, magnesium oxide, or a mixture thereof, and it is most preferred that the metal oxide c) is zinc oxide.

Preferably, the carbon black is combined with the nanoparticles of metal oxides such as zinc oxide (ZnO) or magnesium oxide (MgO), especially nano ZnO: 90% particle size less than 50 nm (on the basis BET standard measurement).

The metal oxides preferably have not more than 2% of contaminations.

A preferred weight ratio of metal oxide to carbon black is from 1:25 to 1:10, more preferably from 1:10 to 1:5 and in particular 1:5 to 1:2.5.

Furthermore, it is preferred that the self-extinguishing properties of the polymer foam are improved (the improvement being measured in accordance with DIN 4102 B1 and B2 test method) by the use of cenospheres having
i) a particle size distribution, as determined by laser diffraction, in the range of 5-600 µm;
ii) a mineral composition of
   - 20-45 wt.%, preferably 27-33 wt.% of Al₂O₃,
   - 40-80 wt.%, preferably 55-65 wt.% of SiO₂,
   - 0.5-12 wt.%, preferably 4-8 wt.% of Fe₂O₃, and
   - optionally further oxides; and
iii) a gas composition of
   - 30-95 %, preferably 50-85 % of CO₂,
   - 5-70 %, preferably 15-50 % of nitrogen, and
   - optionally further gases.

Preferably, cenosphere products of the Omya Fillite type are used.

It is further preferred that the cenospheres have a hardness of 4 to 6 on the Mohs scale, preferably about 5.

Moreover, it is preferred that the cenospheres have an average wall thickness of 2 to 20 % of the sphere diameter, preferably 5 to 10%.

In a preferred embodiment, the cenospheres have a melting temperature of 1000-1500 °C, preferably 1150-1400°C.

In a further preferred embodiment, the cenospheres have a thermal conductivity of 0.02 to 1.0 W/m·K, preferably 0.06-0.3 W/m·K.

It is further preferred that the cenospheres have a moisture content of 0.01-1.5%, preferably 0.05-0.8 %.

Finally, it is in terms of the cenospheres preferred that they have a crush strength of 70-400 kg/cm2, preferably 90-250 kg/cm2.

Preferably, bulk density is measured in accordance with Omya test method (GB LTM 001), and particle size is preferably determined according to test method (GB LTM 016). Preferably, the moisture content is determined according to Omya test method GBRN LTM 007.

Moreover, the content of carbon black may cause thermal instability. That is why thermal aging of foams comprising carbon black has a significant influence on the final dimensions of moulded blocks. Carbon black may decrease the glass transition temperature of vinyl aromatic polymers or generally increase foam heat capacity, which leads to the shrinking or change of dimensions of the moulded blocks during thermal conditioning. The above-mentioned phenomena may undesirably cause the formation of scrap during the sectioning of the moulded blocks. Thus, in a preferred embodiment of the present invention, the dimensional stability of foam blocks made of vinyl aromatic polymers comprising carbon black is improved by preparing polymer foam from a vinyl aromatic copolymer with p-tert-butylstyrene comonomer, or some other sterically hindered styrene comonomer.

In other words, the addition to the styrene monomer of a specific styrene comonomer possessing steric hindrance, in particular p-tert-butylstyrene, increases the glass transition temperature of such a vinyl aromatic copolymer. In such a manner the addition of a specific styrene comonomer to the styrene monomer improves the thermal stability of vinyl aromatic copolymer, which subsequently leads to better dimensional stability of moulded blocks made thereof.

The vinyl aromatic copolymer is preferably comprised of 1 to 99 wt.% of styrene monomer and correspondingly 99 to 1 wt.% of p-tert-butylstyrene monomer, as follows (amounts in wt.%, based on the total amount of monomer):

| **Monomer** | **Preferred (wt%)** | **More preferred (wt%)** | **Most preferred (wt%)** |
|---|---|---|---|
| Styrene | 1-99 | 50-98 | 75-95 |
| p-tert-Butylstyrene | 99-1 | 2-50 | 25-5 |

Furthermore, the invention relates to a compounded masterbatch for the preparation of expandable polymer granulates, the masterbatch being obtained by compounding of
i)
   a) calcium phosphate, and optionally silica,
   b) carbon black, and optionally c) nanoparticles of metal oxide, the nanoparticles having a 90% particle size of less than 100 nm (on the basis of a BET standard measurement), and preferably of less than 50 nm,
ii) styrene homo- or copolymer, and
   optionally iii) styrene monomer,
wherein the total amount of component i) in the masterbatch is 10 to 60 wt.%, and wherein component i) has been coated with one or more silanes during compounding of the masterbatch.

### II) Processes for the preparation of expandable polymer granulate

In a second aspect, the invention relates to a process for the preparation of expandable polymer granulate. Such granulate may be prepared by compounding in an extrusion process, alternatively by suspension polymerization, or further alternatively in a continuous mass polymerization process.

### IIa) Preparation of expandable polymer granulate in an extrusion process

According to the first embodiment of the second aspect, expandable polymer granulate is prepared in an extrusion process comprising the following steps:
i) feeding vinyl aromatic polymer or copolymer into an extruder,
ii) adding a) calcium phosphate, and optionally silica, and and b) carbon black, and optionally thermal stabiliser and flame suppressant,
iii) injecting blowing agent into the melt of polymer or copolymer,
iv) extruding the homogenous blend, and
v) pelletizing the blend in an underwater pelletizer, so as to obtain the granulate.

In step i), vinyl aromatic polymer (in particular polystyrene or its vinyl copolymer for instance with p-tert-butylstyrene, or the mixture of different types of polystyrene) is fed into a single or twin screw extruder. The temperature in the extruder is preferably in the range of 100-250 °C, more preferably of 150-230 °C. Preferably, the polymer has an average molecular weight in the range of from 90 to 400 kg/mol.

In step ii), carbon black and and calcium phosphate (and optionally silica), are added in the form of a masterbatch or in the form of powders; the addition of the compacted form is also possible. Other additives such as nucleating agents can be added together with the athermanous fillers or with the flame retardant system (see above), thermal stabilizers and bromic acid scavengers may then be added.

In order to improve the self-extinguishing properties of the final product, cenospheres are then preferably added in the form of a masterbatch or in the form of powder. Cenospheres can be introduced to the process together with athermanous fillers or together with flame retardant.

It was observed that proper dispersion of additives in the polymer melt improves the cell structure uniformity of a final product (foam). More uniform structure is achieved when the dispersion of particles and flame retardant is homogenous. It was further noticed that addition of specific silanes, in particular triethoxy(phenyl)silane, to the flame retardant system improves its further dispersion in polymer matrix foam and thus influences the creation of a more uniform cell structure (see Fig. 2 below).

Because the polymeric brominated styrene-butadiene rubber is quite sensitive to the thermal degradation, a package of thermal stabilizers and bromic acid scavenger may be used to improve its thermal stability at 150 to 230 °C. It is preferably used in a total amount not higher than 2 wt.% by the weight of solid additives.

Subsequently, in step iii), the blowing agent is injected and dissolved in the polymer melt to the last sections of the main extruder. Typically, blowing agents used are n-pentane, cyclopentane, i-pentane, combination of two of them or their mixture. In addition, halogenated aliphatic hydrocarbons or alcohols containing from 1 to 3 carbons are commonly used.

Then the mass is in step iv) transported and cooled in the "cooling extruder" from a temperature 230 °C down to 150 °C. The flame retardant with thermal stabilizers, acid scavenger (with or without nucleating agent) is added through the side arm extruder connected to the last section of the cooling unit.

Finally, in step v), the homogenous polymer or copolymer blend comprising a) tricalcium phosphate (and optionally silica), b) carbon black, and nucleating agent, flame retardant with thermal stabilizers and acid scavenger, cenospheres and blowing agent is extruded through the static mixer, polymer melt filter, diverter valve, finally die-holes and cut by rotating knifes in a pressurized underwater pelletizer unit in order to obtain micro pellets.

Pellets are preferably pre-treated by applying a coating of a mixture of mono- and triglycerides of fatty acids and stearic acid salts and then pre-expanded by means of steam.

### IIb) Preparation of expandable polymer granulate in suspension

According to a second embodiment of the second aspect, expandable polymer granulate is prepared in an aqueous suspension polymerization process comprising the steps:
i) providing a mixture comprising
   i1) at least one suspending agent which is an inorganic acid salt,
   i2) at least one suspension stabilizer selected from the group of anionic surface active compounds and/or high molecular weight compounds (e.g. hydrophilic and/or amphiphilic polymers), and
   i3) water (preferably demineralised water),
ii) adding a vinyl aromatic monomer and optionally one or more comonomers to the mixture, and subsequently adding
   ii1) optional polymeric suspension aid,
   ii2) athermanous filler,
   ii3) flame retardant,
   ii4) flame suppressor, and
   ii5) at least one peroxide (or the mixture of two or more peroxides) as reaction initiator, and then polymerizing the monomer and optional comonomers in the suspension phase,
iii) continuing the polymerization (preferably until the concentration of vinyl aromatic monomer(s) is below 1000 ppm by weight, based on the weight of the polymer),
iv) adding the blowing agent during or after the polymerization step,
v) cooling, and then separating the granulate from the water.

The athermanous fillers as mandatory according to the present invention (namely a) calcium phosphate, and optionally silica, and b) carbon black) may be added in the form of a masterbatch, they may be introduced at the beginning of the suspension polymerization process, or may be dissolved in the monomer and/or a mixture of the monomer and comonomer.

According to the present invention, component a), calcium phosphate, and optionally silica, and carbon black b) may be introduced in step ii) or in step iii).

The granulate is prepared using well known inorganic salts of phosphoric acid, such as types of calcium phosphate, magnesium phosphate, or a combination of salts as suspending agents. These salts may be added to the reaction mixture in a finely divided form, or as a product of an *in situ* reaction (for example, between sodium phosphate and magnesium sulphate).

The salts are supported in their suspending action by anionic surface-active compounds, such as sodium dodecylobenzene sulfonate or sodium poly(naphthalene formaldehyde) sulfonate. Those surface-active compounds can be also being prepared *in situ* using their precursors such as sodium metabisulfite and potassium persulfate. The suspension can be also stabilized by high molecular weight organic suspension stabilizer, such as polyvinyl alcohol or hydroxyethylcellulose.

To improve the stability of the suspension, up to 30 wt.% of polymer (fresh vinyl aromatic polymer or waste vinyl aromatic polymer from a previous polymerization) may be added as the optional suspension aid, preferably 5 to 15 wt.%, based on the vinyl aromatic monomer amount. It increases the viscosity of the reagent mixture (monomer with all additives), which facilitates the creation of a suspension. The same or similar effect can be achieved by mass pre-polymerization of the monomer or mixture of comonomers and additives until the suitable melt viscosity is obtained (as for 1% to 30% of polymer concentration).

In the most preferred process, before start of the polymerization step iii), athermanous fillers in the form of a concentrated masterbatch are added to the styrene and/or its mixture with comonomer, particularly p-tert-butylstyrene. The masterbatch can contain from 10 to 60 % of athermanous fillers - carbon black, or spherically shaped amorphous silicon dioxide (silica), calcium phosphate and nano zinc oxide pre-silanized or silanized in the masterbatch compounding process by the triethoxy(phenyl)silane to decrease its hydrophilic properties. Athermanous fillers can be combined with carbon black in one masterbatch or all can be added in the form of silanized powders. The same is referred to flame suppressors, particularly cenospheres.

The polymerization is then continued in aqueous suspension phase, in the presence of the above-mentioned suspending agents, suspension stabilizers, athermanous fillers, flame retardants and suppressors, optionally at least in the presence of suspension aid.

The polymerization process is triggered by initiators. Normally, two organic peroxides are used as initiators. The first peroxide, with a half-life of one hour at 80-95°C, is used to start and run the reaction. The other, with a half-life of one hour at 105-125°C, is used during the following polymerization process continued in the higher temperature, so called high temperature cycle (HTC).

The end of the process is typically indicated by a concentration of residual vinyl monomers of below 1000 ppm by weight, based on the mass of vinyl aromatic polymer or copolymer. The vinyl aromatic polymer or copolymer which is obtained at the end of the process typically has an average molecular mass (Mw) ranging from 50 to 600 kg/mol, preferably from 150 to 450, most preferably from 100 to 350 kg/mol. The procedure for controlling molecular mass in suspension polymerization is well known and described in detail in Journal of Macromolecular Science, Review in Macromolecular Chemistry and Physics C31 (263) p. 215-299 (1991).

During the polymerization process, conventional additives can be added directly to the monomers, their solution with suspension aid, to the pre-polymer, or to the suspension. Additives such as flame retardant systems, nucleating agents, antistatic agents, blowing agents and colorants during the process stay in the polymer drops and are thus present in the final product. The concentrations of conventional additives are the same as for the extrusion process, as set out above.

The flame retardant systems suitable for the present invention are similar to those used in the extrusion process described above. One suitable system is the combination of two types of compounds, namely a brominated aliphatic, cycloaliphatic, aromatic or polymeric compound containing at least 50 wt.% of bromine (such as hexabromocyclododecane, pentabromomonochloro-cyclohexane, or a polymeric bromine compound, specifically brominated styrene-butadiene rubber and a second compound called synergistic compound which can be e.g. initiator or peroxide - dicumyl peroxide, cumene hydroxide, and 3,4-dimethyl-3,4-diphenylbutane. The content of flame retardant system is typically in the range of 0.2 to 5.0 wt.% with respect to the total weight of vinyl aromatic polymer (weight of monomer(s) plus weight of polymer if added on the start), preferably between 1 and 3 wt.%. The ratio between bromine compound and synergistic compound is preferably in the range from 1:1 to 15:1 weight to weight, usually from 3:1 to 5:1. The flame suppressant (cenospheres) is added in the same way as athermanous fillers, in the form of concentrated masterbatch up to 60 % or in the form of powder; concentrations are the same as for extrusion process, as set out in IIa) above.

The blowing agent or agents are preferably added during the polymerization to suspension phase and are selected from aliphatic or cyclic hydrocarbons containing from 1 to 6 carbons and their derivatives. Typically are used n-pentane, cyclopentane, i-pentane, combination of two of them or their mixture. In addition, the halogenated aliphatic hydrocarbons or alcohols containing from 1 to 3 carbons are commonly used. The blowing agent or agents can also be added after the end of polymerization.

At the end of the polymerization, spherical particles of expandable styrenic polymer are obtained as granulate, with an average diameter range of 0.3 to 2.3 mm, preferably from 0.8 to 1.6 mm. The particles can have different average molecular mass distribution depending on their size, but all contain used additives dispersed homogenously in the polymer matrix.

In the final step after the HTC step, the mass is cooled down to e.g. 35 °C, and the polymer granulate is separated from the water, preferably in a centrifuging process. The particles are then dried and preferably coated with a mixture of mono- and triglycerides of fatty acids and stearic acid salts.

After discharging the particles from the reactor, they are typically washed: first with water, then with non-ionic surface active agent in aqueous solution, and finally again with water; they are then desiccated and dried with hot air having a temperature in the range 35-65°C.

The final product is typically pre-treated by applying a coating (the same as for extruded granulate) and can be expanded by the same method as the extrusion product.

### IIc) Preparation of expandable granulate in continuous mass

According to a third embodiment of the third aspect, expandable polymer granulate is prepared in a continuous mass process comprising the following steps:
i) providing continuously to a mass prepolymerization reactor (or the first from a cascade reactor) a stream of:
   i1) vinyl aromatic monomer and optionally at least one comonomer (preferably p-tert-butylstyrene),
   i2) at least one additive solution, and
   i3) optionally recycled monomer,
ii) continuing polymerization in the prepolymerization reactor or the sequence of cascade reactors,
iii) adding athermanous fillers: a) calcium phosphate (preferably tricalcium phosphate), and optionally silica, and b) carbon black with or without nano metal oxide, and optionally further additives, preferably flame suppressant,
iv) degassing the polymer,
v) feeding the polymer in molten state into the extruder, preferably directly from the polymerization plant,
vi) optionally adding a flame retardant system including synergist and thermal stabilisers,
vii) injecting the blowing agent,
viii) extruding the homogenous polymer blend, and
ix) pelletizing in an underwater pelletizer, so as to obtain the granulate.

The reactor or cascade reactor is preferably arranged horizontally. If a cascade reactor is used, then there are preferably up to 5 reactors, in particular up to 4, such as three reactors.

The continuous mass polymerization is process congruous to extrusion process but the vinyl aromatic polymer or copolymer together with athermanous fillers and flame suppressant is used in molten state and feeding extruder directly from the polymerization plant.

The mass polymerization reactor (or first from cascade reactors) is fed continuously by vinyl aromatic monomer particularly styrene, and optionally by its vinyl aromatic comonomer, for instance p-tert-butylstyrene.

At this stage, athermanous fillers in the form of masterbatch or in the form of powders are fed into the mass polymerisation reactor, one or more additives and recycled monomer recovered from the process.

The athermanous additives (e.g. masterbatches) are preferably dissolved in the vinyl aromatic monomer or before feed to the polymerization reactor.

The polymerisation reaction is initiated thermally, without addition of initiators. In order to facilitate heat collection, polymerisation is generally carried out in presence of for instance monocyclic aromatic hydrocarbon.

The prepolymerised mass from the pre-polymerisation reactor is pumped through the sequence of several horizontal reactors, and the polymerisation reaction is subsequently continued.

At the end of the mass polymerization stage, the rest of unpolymerized monomer is removed by degassing of the melt.

A vinyl polymer in molten state, produced in mass polymerization and containing athermanous fillers (carbon black with or without nano metal oxide and silica or/and calcium phosphate, and optionally cenospheres as flame suppressant) are fed into the extruder at the temperature in the range of from 100 to 250 °C, preferably from 150 to 230°C. In the next stage, the flame retardant system and nucleating agent is fed to the polymer melt. A combination of two types of flame retarding compounds can be used, namely a brominated aliphatic, cycloaliphatic, aromatic or polymeric compound containing at least 50 wt.% of bromine, and a second compound called synergistic compound, which can be bicumyl (2,3-dimethyl-2,3-diphenylbutane) or 2-hydroperoxy-2-methylpropane.

The concentrations of additives are the same as for the extrusion process, as set out above.

In the following step, the blowing agent is injected into the molten polymer blend and mixed.

The blowing agent or agents are the same as for the suspension process, i.e. selected from aliphatic or cyclic hydrocarbons containing from 1 to 6 carbons and their derivatives.

The polymer with all additives and blowing agent is subsequently extruded to give expandable beads.

The homogenous polymer blend comprising carbon black, silica, cenospheres, additives and blowing agent is pumped to the die, where it is extruded through a number of cylindric die-holes with 0.5-0.8 mm of diameter, immediately cooled by a water stream and cut with a set of rotating knives in pressurized underwater pelletizer, to receive micropellets (granulate).

The beads are transported by water, washed, drained off and fractioned. The final product is pre-treated in the same way, as it is in the suspension and extrusion processes.

### III) Expandable polymer granulate

In a third aspect, the invention relates to expandable polymer granulate (particles) as prepared by the IIa) extrusion or IIb) suspension process or IIc) the continuous mass polymerization.

Preferably, the parameters relating to the silica, calcium phosphate, carbon black, nano metal oxides, cenospheres and furthermore the use of styrene copolymer with p-tert-butylstyrene, set out above in relation to the process are equally applied to the expandable polymer.

Preferably, the expandable polymer further comprises one or more athermanous additives selected from graphite, petroleum coke, graphitized carbon black, graphite oxides, and graphene.

### IV) Expanded polymer foam

In a forth aspect, the invention relates to expanded polymer foam.

The foam in accordance with the invention typically has a density of 10 to 30 kg/m³, and a thermal conductivity of 25 to 35 mW/K·m.

It is noted that, unlike the properties of the starting materials, the properties of additives as contained in the granulate or foam are notoriously difficult to determine. It is often considered more appropriate to characterize the additives in granulate and foam with reference to the properties of the additives as initially used.

The advantages of the present invention become apparent from the following examples. Unless indicated otherwise, all percentages are given by weight.

Moreover, whenever reference is made in the description to an amount of additive "by weight of polymer", this refers to the amount of the additive by weight of polymer component inclusive of (solid and, if any, liquid) additives.

### Examples

In reference to the processes for the preparation of expandable polymers granulate by the extrusion process, the following examples were performed:

### Example 1

In the first example, the general purpose polystyrene-Synthos PS 585X, type CSX910 carbon black from Cabot Corporation with a BET surface of 73.6 m²/g and a sulphur content of 4000 ppm was used in concentration of 5 wt.%. The Synthos PS 585X and CSX910 were dosed to the main extruder together with spherically-shaped amorphous silicon dioxide from ELKEM in an amount of 1 wt.% and tricalcium phosphate (Expandia R) from Innophos in amount of 2 wt.% (both combined with carbon black in one masterbatch). In example 3a, the nano zinc oxide in combination with CSX910 (compounded in one masterbach) was used to prove its positive influence on the further "lambda" decrease. Additionally styrene copolymer with 40 wt.% concentrated para-tert-butylstyrene was added in example 8a to improve glass transition temperature of the polymer matrix. The polymeric flame retardant - (brominated styrene/butadiene rubber) in the concentration of 2 wt.%, together with thermal stabilizers: Irganox 1010 (0.1 wt.%), Irgafos 126 (0.1 wt.%), bromic acid scavenger: Epon 164 from Momentive (0.2 wt.%) and nucleating agent: Polywax 2000 (0.3 wt.%) were fed as powders mixture to the side arm extruder connected to the last section of "cooling extruder". The flame suppressor (cenospheres) was added together with athermanous fillers in the form of masterbach, in examples 2, 3 and 3a. In examples 8 and 8a the silane was used for comparison to improve additives dispersion, thus cell structure uniformity. The pentane and isopentane mixture 85/15% in the concentration of 5.5 wt.% were fed to the last section of the main extruder.

### Example 2

The extrusion process of Example 1 was used with the following components:
- General purpose polystyrene Synthos PS 585X with MFI 8 g/10 min.
- Carbon black CSX910: 5 wt.%
- Spherically-shaped amorphous silicon dioxide: 1 wt.%
- Tricalcium phosphate: 2 wt%
- Cenospheres: 3 wt.%
- Polymeric flame retardant (brominated styrene/butadiene rubber): 2 wt.%
- Pentane / isopentane mixture (85/15 %): 5.5 wt.%
- Nucleating agent (Polywax 2000): 0.3 %

### Example 3

The following components were used:
- General purpose polystyrene Synthos PS 585X with MFI 8 g/10 min.
- Carbon black CSX910: 5 wt.%
- Spherically-shaped amorphous silicon dioxide: 1 wt.%
- Tricalcium phosphate: 2 wt%
- Cenospheres: 3 wt.%
- Polymeric flame retardant (brominated styrene/butadiene rubber): 2.0 w%
- Bicumyl: 0.2 wt.%
- Pentane / isopentane mixture (85/15 %): 5.5 wt.%
- Nucleating agent (Polywax 2000): 0.3 %

### Example 3a

The following components were used:
- General purpose polystyrene Synthos PS 585X with MFI 8 g/10 min.
- Carbon black CSX910/Nano ZnO (5:1): 6 wt.%
- Spherically-shaped amorphous silicon dioxide: 1 wt.%
- Tricalcium phosphate: 2 wt%
- Cenospheres: 3 wt.%
- Polymeric flame retardant (brominated styrene/butadiene rubber): 2.0 w%
- Bicumyl: 0.2 wt.%
- Pentane / isopentane mixture (85/15 %): 5.5 wt.%
- Nucleating agent (Polywax 2000): 0.3 %

### Comparative example 4

The following components were used:
- General purpose polystyrene Synthos PS 585X with MFI 8 g/10 min.
- Carbon black CSX910: 5 wt.%
- Polymeric flame retardant (brominated styrene/butadiene rubber): 2.0 w%
- Bicumyl: 0.2 wt.%
- Pentane / isopentane mixture (85/15 %): 5.5 wt.%
- Nucleating agent (Polywax 2000): 0.3 %

### Comparative example 5

The following components were used:
- General purpose polystyrene Synthos PS 585X with MFI 8 g/10 min.
- Carbon black CSX910: 6 wt.%
- Polymeric flame retardant (brominated styrene/butadiene rubber): 2.0 w%
- Bicumyl: 0.2 wt.%
- Pentane / isopentane mixture (85/15 %): 5.5 wt.%
- Nucleating agent (Polywax 2000): 0.3 %

### Comparative example 6

- General purpose polystyrene Synthos PS 585X with MFI 8 g/10 min.
- Carbon black CSX910: 7 wt.%
- Polymeric flame retardant (brominated styrene/butadiene rubber): 2.0 w%
- Bicumyl: 0.2 wt.%
- Pentane / isopentane mixture (85/15 %): 5.5 wt.%
- Nucleating agent (Polywax 2000): 0.3 %

### Comparative example 7

- General purpose polystyrene Synthos PS 585X with MFI 8 g/10 min.
- Carbon black CSX910: 8 wt.%
- Polymeric flame retardant (brominated styrene/butadiene rubber): 2.0 w%
- Bicumyl: 0.2 wt.%
- Pentane / isopentane mixture (85/15 %): 5.5 wt.%
- Nucleating agent (Polywax 2000): 0.3 %

### Example 8

The following components were used:
- General purpose polystyrene Synthos PS 585X with MFI 8 g/10 min.
- Carbon black CSX910: 5 wt.%
- Spherically-shaped amorphous silicon dioxide: 1 wt.%
- Tricalcium phosphate: 2 wt%
- Polymeric flame retardant (brominated styrene/butadiene rubber): 2.0 w%
- Silane (triethoxy(phenyl)silane): 0.01 wt.%
- Bicumyl: 0.2 wt.%
- Pentane / isopentane mixture (85/15 %): 5.5 wt.%
- Nucleating agent (Polywax 2000): 0.3 wt.%

### Example 8a

The following components were used:
- General purpose polystyrene Synthos PS 585X with MFI 8 g/10 min.
- General purpose polystyrene Synthos PS 585X modified by comonomer in content of 40 %: 15 wt% (i.e 6 % of p-TBS in the total mixture).
- Carbon black CSX910: 5 wt.%
- Spherically-shaped amorphous silicon dioxide: 1 wt.%
- Tricalcium phosphate: 2 wt%
- Polymeric flame retardant (brominated styrene/butadiene rubber): 2.0 w%
- Silane (triethoxy(phenyl)silane): 0.01 wt.%
- Bicumyl: 0.2 wt.%
- Pentane / isopentane mixture (85/15 %): 5.5 wt.%
- Nucleating agent (Polywax 2000): 0.3 wt.%

**Table 1. Examples summary.**

| Components (wt.%) | Ex. 1 | Ex. 2 | Ex. 3 | Ex. 3a | Ex. 4 | Ex. 5 | Ex. 6 | Ex. 7 | Ex. 8 | Ex. 8a |
|---|---|---|---|---|---|---|---|---|---|---|
| GP585X with 40 % of p-TBS | | | | | | | | | | 15 (6% p-TBS in composition) |
| CSX910 | 5 | 5 | 5 | - | 5 | 6 | 7 | 8 | 5 | 5 |
| CSX910/NanoZnO (5:1) | - | - | - | 6 | - | - | - | - | - | - |
| Silica | 1 | 1 | 1 | 1 | - | - | - | - | 1 | 1 |
| Tricalcium phosphate | 2 | 2 | 2 | 2 | - | - | - | - | 2 | 2 |
| Cenospheres | - | 3 | 3 | 3 | - | - | - | - | - | - |
| Flame retardant | 2 | 2 | 2 | 2 | 2 | 2 | 2 | 2 | 2 | 2 |
| Silane | - | - | - | - | - | - | - | - | 0.01 | 0.01 |
| Bicumyl | 0.2 | - | 0.2 | 0.2 | 0.2 | 0.2 | 0.2 | 0.2 | 0.2 | 0.2 |
| Polywax 2000 | 0.3 | 0.3 | 0.3 | 0.3 | 0.3 | 0.3 | 0.3 | 0.3 | 0.3 | 0.3 |
| Pentane/Isopentane | 5.5 | 5.5 | 5.5 | 5.5 | 5.5 | 5.5 | 5.5 | 5.5 | 5.5 | 5.5 |

**Table 2. Final product parameters at ca. 18.5 g/l**

| Parameter | Ex. 1 | Ex. 2 | Ex. 3 | Ex. 3a | Ex. 4 | Ex. 5 | Ex. 6 | Ex. 7 | Ex. 8 | Ex. 8a |
|---|---|---|---|---|---|---|---|---|---|---|
| Glass transition (°C)/ASTM D7426/ | 103 | 103 | 104 | 103 | 101 | 100 | 100 | 98 | 103 | 108 |
| Thermal conductivity (mW/m·K) | 30.1 | 30.3 | 30.3 | 29.4 | 30.8 | 30.6 | 30.2 | 29.8 | 30.0 | 30.1 |
| Flammability /EN 13163/ | + | + | + | + | + | - | - | - | + | + |
| Flammability /DIN 4102 B1/B2/ | B2 | B2 | B1 | B1 | - | - | - | - | B2 | B2 |
| Compressive stress at 10% def. (MPa) /EN 13163/ | 80 | 80 | 79 | 81 | 71 | 67 | 62 | 61 | 82 | 95 |
| Bending strength (MPa) /EN 13163/ | 195 | 191 | 190 | 191 | 190 | 185 | 169 | 152 | 189 | 205 |

| | | | | | | | | | | |
|---|---|---|---|---|---|---|---|---|---|---|
| Passed (+ or B2 or B1); Not passed (-) | | | | | | | | | | |

### Comparative example 9

In this and the following examples, the method of production was changed to suspension polymerization. The same carbon black CSX910 from Cabot Corporation in the concentration 5 wt.% was used in masterbatch form, based on general purpose polystyrene-Synthos PS 585X. Comonomer (para-tert-butylstyrene, p-TBS) was used in the mixture of styrene in example 16. In examples 11-16 with additional fillers: tricalcium phosphate, cenospheres, silica and nano zinc oxide were jointly compounded with carbon black, and coated by polymeric silane first to improve its affinity to the organic phase (monomer). The polymeric flame retardant system-(brominated styrene/butadiene rubber) in the concentration of 2.5 wt.% together with dicumyl peroxide in the concentration 1.0 wt.%, and nucleating agent: Polywax 1000 (0.1 wt.%) were added in pure powder form. Pentane and isopentane mixture (85/15) in a concentration of 6.0 wt.% was dosed to the closed reactor during the second stage of polymerization.

### Comparative example 10

The same process was used as in Example 9 and the following components:
- Carbon black CSX910: 6 wt.%
- polymeric flame retardant (brominated styrene/butadiene rubber): 2.5 wt.%
- Dicumyl peroxide: 1.0 wt.%
- Pentane / isopentane mixture (85/15 %): 6.0 wt.%
- Nucleating agent (Polywax 1000): 0.1 %

### Example 11

The same process was used and the following components:
- Carbon black CSX910: 5 wt.%
- Spherically-shaped amorphous silicon dioxide pre-coated with oligomeric silane (Dynasylan 6598): 1 wt.%
- Tricalcium phosphate pre-coated with oligomeric silane (Dynasylan 6598): 1 wt%
- Polymeric flame retardant (brominated styrene/butadiene rubber): 2.5 wt.%
- Dicumyl peroxide: 1.0 wt.%
- Pentane / isopentane mixture (85/15 %): 6.0 wt.%
- Nucleating agent (Polywax 1000): 0.1 %

### Comparative example 12

The same process was used and the following components:
- Carbon black CSX910: 5 wt.%
- Cenospheres pre-coated with oligomeric silane (Dynasylan 6598): 1 wt.%
- Polymeric flame retardant (brominated styrene/butadiene rubber): 2.5 wt.%
- Dicumyl peroxide: 1.0 wt.%
- Pentane / isopentane mixture (85/15 %): 6.0 wt.%
- Nucleating agent (Polywax 1000): 0.1 %

### Example 13

The same process was used and the following components:
- Carbon black CSX910: 5 wt.%
- Spherically-shaped amorphous silicon dioxide pre-coated with oligomeric silane (Dynasylan 6598): 1 wt.%
- Cenospheres pre-coated with oligomeric silane (Dynasylan 6598): 1 wt.%
- Tricalcium phosphate pre-coated with oligomeric silane (Dynasylan 6598): 1 wt%
- Polymeric flame retardant (brominated styrene/butadiene rubber): 2.5 wt.%
- Dicumyl peroxide: 1.0 wt.%
- Pentane / isopentane mixture (85/15 %): 6.0 wt.%
- Nucleating agent (Polywax 1000): 0.1 %

### Example 13a

The same process was used and the following components:
- Carbon black CSX910/Nano ZnO (5:1): 6 wt.%
- Spherically-shaped amorphous silicon dioxide pre-coated with oligomeric silane (Dynasylan 6598): 1 wt.%
- Cenospheres pre-coated with oligomeric silane (Dynasylan 6598): 1 wt.%
- Tricalcium phosphate pre-coated with oligomeric silane (Dynasylan 6598): 1 wt%
- Polymeric flame retardant (brominated styrene/butadiene rubber): 2.5 wt.%
- Dicumyl peroxide: 1.0 wt.%
- Pentane / isopentane mixture (85/15 %): 6.0 wt.%
- Nucleating agent (Polywax 1000): 0.1 %

### Example 14

The same process was used and the following components:
- Carbon black CSX910: 5 wt.%
- Spherically-shaped amorphous silicon dioxide pre-coated with oligomeric silane (Dynasylan 6598): 1 wt.%
- Tricalcium phosphate pre-coated with oligomeric silane (Dynasylan 6598): 1 wt%
- Cenospheres pre-coated with oligomeric silane (Dynasylan 6598): 2 wt.%
- Polymeric flame retardant (brominated styrene/butadiene rubber): 2.0 wt.%
- Dicumyl peroxide: 0.8 wt.%
- Pentane / isopentane mixture (85/15 %): 6.0 wt.%
- Nucleating agent (Polywax 1000): 0.2 %

### Comparative example 15

- Carbon black CSX910: 5 wt.%
- Spherically-shaped amorphous silicon dioxide pre-coated with oligomeric silane (Dynasylan 6598): 1 wt.%
- Cenospheres pre-coated with oligomeric silane (Dynasylan 6598): 1 wt.%
- Polymeric flame retardant (brominated styrene/butadiene rubber): 2.0 w%
- Dicumyl peroxide: 0.8 wt.%
- Pentane / isopentane mixture (85/15 %): 6.0 wt.%
- Nucleating agent (Polywax 1000): 0.1 %

### Comparative example 16

- para-tert-butylstyrene: 2 wt%
- Carbon black CSX910: 5 wt.%
- Spherically-shaped amorphous silicon dioxide pre-coated with oligomeric silane (Dynasylan 6598): 1 wt.%
- Cenospheres pre-coated with oligomeric silane (Dynasylan 6598): 1 wt.%
- Polymeric flame retardant (brominated styrene/butadiene rubber): 2.0 w%
- Dicumyl peroxide: 0.8 wt.%
- Pentane / isopentane mixture (85/15 %): 6.0 wt.%
- Nucleating agent (Polywax 1000): 0.1 %

**Table 3. Examples summary.**

| Components (wt.%) | Ex. 9 | Ex. 10 | Ex. 11 | Ex. 12 | Ex. 13 | Ex. 13a | Ex. 14 | Ex. 15 | Ex. 16 |
|---|---|---|---|---|---|---|---|---|---|
| p-TBS | | | | | | | | | 2 |
| CSX910 | 5 | 6 | 5 | 5 | 5 | - | 5 | 5 | 5 |
| CSX910/NanoZnO (5:1) | - | - | - | - | - | 6 | - | - | - |
| Silica | - | - | 1 | - | 1 | 1 | 1 | 1 | 1 |
| Cenospheres | - | - | - | 1 | 1 | 1 | 2 | 1 | 1 |
| Tricalcium phosphate | | | 1 | | 1 | 1 | 1 | | |
| Flame retardant | 2.5 | 2.5 | 2.5 | 2.5 | 2.5 | 2.5 | 2 | 2 | 2 |
| Dicumyl peroxide | 1.0 | 1.0 | 1.0 | 1.0 | 1.0 | 1.0 | 0.8 | 0.2 | 0.2 |
| Polywax 1000 | 0.1 | 0.1 | 0.1 | 0.1 | 0.1 | 0.1 | 0.2 | 0.1 | 0.1 |
| Pentane/Isopentane | 6.0 | 6.0 | 6.0 | 6.0 | 6.0 | 6.0 | 5.5 | 5.5 | 5.5 |

**Table 4.Final product parameters at ca. 19.5 g/l**

| **Parameter** | **Ex. 9** | **Ex. 10** | **Ex. 11** | **Ex. 12** | **Ex. 13** | **Ex. 13a** | **Ex. 14** | **Ex. 15** | **Ex. 16** |
|---|---|---|---|---|---|---|---|---|---|
| Glass transition (°C)/ASTM D7426/ | 103 | 101 | 102 | 103 | 102 | 103 | 102 | 103 | 106 |
| Thermal conductivity (mW/m·K) | 30.8 | 30.3 | 30.0 | 30.7 | 30.1 | 29.5 | 30.1 | 30.0 | 29.9 |
| Flammability /EN 13163/ | + | + | + | + | + | + | + | + | + |
| Flammability /DIN 4102 B1/B2/ | B2 | - | B2 | B2 | B1 | B1 | B1 | B2 | B2 |
| Compressive stress at 10% def. (MPa) / EN 13163/ | 68 | 62 | 74 | 69 | 74 | 78 | 76 | 72 | 86 |
| Bending strength (MPa) | 174 | 168 | 185 | 182 | 186 | 187 | 183 | 180 | 200 |

| | | | | | | | | | |
|---|---|---|---|---|---|---|---|---|---|
| Passed (+ or B2 or B1)); Not passed (-) | | | | | | | | | |

### Comparative example 17

In this example, the method of styrene polymerization was changed to continuous mass in three reactors cascade. The polymerization of styrene was initiated by heating. The same carbon black CSX910 from Cabot Corporation in the concentration 5 wt.% was used in powder form. The polymeric flame retardant system - (brominated styrene/butadiene rubber) in the concentration of 2.5 wt.% together with bicumyl peroxide in a concentration 0.5 wt.%, and nucleating agent: Polywax 2000 (0.2 wt.%) were added in pure powder form to the extruding raw polystyrene just after degassing of polymer. Pentane and isopentane mixture 85/15 % in the concentration 5.5 wt.% is dosed to extruder. The granulate form was obtained by underwater pelletizing. In examples 18, 19, 21, 21a, 22, the minerals: tricalcium phosphate, cenospheres, silica were coated by silane and jointly compounded to improve their dispersion in the polymer. The comonomer (p-TBS) was added in the last example (Ex. 22) to increase the polymer glass transition.

### Comparative example 18

The method was changed again, namely one reactor for continuous mass polymerization was used. The polymerization of pure styrene was initiated by benzoyl peroxide 0.12 %. The carbon black was added as masterbatch based on Synthos PS 585X.

The components used were as follows:
- Carbon black CSX910: 5 wt.%
- Spherically-shaped amorphous silicon dioxide pre-coated with oligomeric silane (Dynasylan 6598): 1 wt.%
- Polymeric flame retardant (brominated styrene/butadiene rubber): 2.5 wt.%
- Bicumyl: 0.5 wt.%
- Pentane / isopentane mixture (85/15 %): 5.5 wt.%
- Nucleating agent (Polywax 2000): 0.2 %.

### Example 19

The same process as in example 17 was used, with the following components:
- Carbon black CSX910: 5 wt.%
- Spherically-shaped amorphous silicon dioxide pre-coated with oligomeric silane (Dynasylan 6598): 1 wt.%
- Tricalcium phosphate coated by Dynasylan 6598: 2 wt%
- Polymeric flame retardant (brominated styrene/butadiene rubber): 2.5 wt.%
- Bicumyl: 0.5 wt.%
- Pentane / isopentane mixture (85/15 %): 5.5 wt.%
- Nucleating agent (Polywax 2000): 0.2 %

### Comparative example 20

The same process as in example 17 was used, with the following components:
- Carbon black CSX910: 5 wt.%
- Cenospheres pre-coated with oligomeric silane (Dynasylan 6598): 3 wt.%
- Polymeric flame retardant (brominated styrene/butadiene rubber): 2.0 wt.%
- Bicumyl: 0.4 wt.%
- Pentane / isopentane mixture (85/15 %): 5.5 wt.%
- Nucleating agent (Polywax 2000): 0.2 %

### Example 21

The same process as in Example 17 was used and the following components:
- Carbon black CSX910: 5 wt.%
- Spherically-shaped amorphous silicon dioxide pre-coated with oligomeric silane (Dynasylan 6598): 1 wt.%
- Tricalcium phosphate coated by Dynasylan 6598: 2 wt%
- Cenospheres pre-coated with oligomeric silane (Dynasylan 6598): 4 wt.%
- Polymeric flame retardant (brominated styrene/butadiene rubber): 1.5 wt.%
- Bicumyl: 0.3 wt.%
- Pentane / isopentane mixture (85/15 %): 5.5 wt.%
- Nucleating agent (Polywax 2000): 0.2 %

### Example 21a

The same process (Ex 17) was used and the following components:
- Carbon black CSX910/Nano ZnO (5:1): 6 wt.%
- Spherically-shaped amorphous silicon dioxide pre-coated with oligomeric silane (Dynasylan 6598): 1 wt.%
- Tricalcium phosphate coated by Dynasylan 6598: 2 wt%
- Cenospheres pre-coated with oligomeric silane (Dynasylan 6598): 4 wt.%
- Polymeric flame retardant (brominated styrene/butadiene rubber): 1.5 wt.%
- Bicumyl peroxide: 0.3 wt.%
- Pentane / isopentane mixture (85/15 %): 5.5 wt.%
- Nucleating agent (Polywax 2000): 0.2 %

### Example 22

The same process (Ex 17) was used and the following components:
- para-tert-butylstyrene: 5 wt%
- Carbon black CSX910: 3 wt.%
- Spherically-shaped amorphous silicon dioxide pre-coated with oligomeric silane (Dynasylan 6598): 1 wt.%
- Tricalcium phosphate coated by Dynasylan 6598: 2 wt%
- Cenospheres pre-coated with oligomeric silane (Dynasylan 6598): 3 wt.%
- Polymeric flame retardant (brominated styrene/butadiene rubber): 2.0 wt.%
- Dicumyl peroxide: 0.4 wt.%
- Pentane / isopentane mixture (85/15 %): 5.5 wt.%
- Nucleating agent (Polywax 2000): 0.3 %

**Table 5. Examples summary.**

| **Components (wt.%)** | **Ex. 17** | **Ex. 18** | **Ex. 19** | **Ex. 20** | **Ex. 21** | **Ex. 21a** | **Ex. 22** |
|---|---|---|---|---|---|---|---|
| p-TBS | | | | | | | 5 |
| CSX910 | 5 | 5 | 5 | 5 | 5 | - | 3 |
| CSX910/Nano ZnO (5:1) | - | - | - | - | - | 6 | - |
| Silica | - | 1 | 1 | - | 1 | 1 | 1 |
| Tricalcium phosphate | | | 2 | | 2 | 2 | 2 |
| Cenospheres | - | - | - | 3 | 4 | 4 | 5 |
| Flame retardant | 2.5 | 2.5 | 2.5 | 2.0 | 1.5 | 1.5 | 1.0 |
| Bicumyl | 0.5 | 0.5 | 0.5 | 0.4 | 0.3 | 0.3 | 0.2 |
| Polywax 2000 | 0.2 | 0.2 | 0.2 | 0.2 | 0.2 | 0.2 | 0.3 |
| Pentane/Isopentane | 5.5 | 5.5 | 6.0 | 6.0 | 6.0 | 6.0 | 5.5 |

**Table 6. Final product parameters at ca. 20.0 g/l**

| **Parameter** | **Ex. 17** | **Ex. 18** | **Ex. 19** | **Ex. 20** | **Ex. 21** | **Ex. 21a** | **Ex. 22** |
|---|---|---|---|---|---|---|---|
| Glass transition (°C)/ASTM D7426/ | 101 | 102 | 103 | 100 | 103 | 103 | 109 |
| Thermal conductivity (mW/m·K) | 30.7 | 30.0 | 29.7 | 30.4 | 29.8 | 29.2 | 31.0 |
| Flammability (EN 13163) | + | + | + | + | + | + | + |
| Flammability (DIN 4102 B1/B2) | B2 | B2 | B2 | B1 | B1 | B1 | B1 |
| Compressive stress at 10% def. (MPa) | 67 | 66 | 71 | 63 | 70 | 69 | 92 |
| Bending strength (MPa) | 172 | 171 | 179 | 176 | 179 | 180 | 208 |

| | | | | | | | |
|---|---|---|---|---|---|---|---|
| Passed (+ or B2 or B1); Not passed (-) | | | | | | | |

## Claims

1. Use of
a) calcium phosphate, and optionally silica, in combination with
b) carbon black
for decreasing the thermal conductivity of foams prepared from a polymer based on a vinyl aromatic monomer and optionally one or more comonomers,
wherein
a1) the silica is amorphous and has
- a BET surface, as measured according to the description, of 3 to 80 m²/g,
- a particle size distribution, as measured according to the description, within the range of from 3 nm to 1,000 nm, and the silica, if used, is present in an amount of 0.1 to less than 2 wt.%, based on the weight of the polymer,
a2) the calcium phosphate has a particle size, as measured by laser diffraction, of 0.1 µm to 20 µm, and
the calcium phosphate is present in an amount of 0.1 to 10 wt.%, based on the weight of polymer, and
b) the carbon black has
- a BET surface, as measured according to ASTM 6556, of more than 40 up to 250 m²/g, and
- a sulphur content in the range of from 50 to 20,000 ppm, as measured according to ASTM D 1619, and
the carbon black is present in an amount of 0.1 to 12 wt.%, based on the weight of the polymer.

2. The use according to claim 1, wherein the silica has a BET surface, as measured according to the description, of 3 to 80 m²/g, preferably 5 to 70 m²/g, more preferably 8 to 60 m²/g, such as 10 to 50 m²/g, in particular 15 to 40 m²/g, in particular 20 to 30 m²/g, such as about 25 m²/g.

3. The use according to claim 1 or claim 2, wherein the silica has a particle size distribution, as measured according to the description, within the range of from 3 to 1,000 nm, preferably of 20 to 800 nm, more preferably 30 to 600 nm, such as 40 to 400 nm.

4. The use according to any one of the preceding claims, wherein the amount of silica is 0.5 to 1.6 wt.%, preferably 0.7 to 1.3 wt.%, more preferably about 1.0 wt.%, based on the weight of the polymer.

5. The use according to any one of the preceding claims, wherein the calcium phosphate has a particle size, as measured by laser diffraction, of 1 µm to 18 µm, preferably 2 µm to 15 µm.

6. The use according to any one of the preceding claims, wherein the amount of calcium phosphate is 0.5 to 10 wt.%, preferably 1 to 5 wt.%, based on the weight of polymer.

7. The use according to any one of the preceding claims, wherein the calcium phosphate is tricalcium phosphate.

8. The use according to any one of the preceding claims, wherein the carbon black has a BET surface, as measured according to ASTM 6556, of 41 to 200 m²/g, preferably of 45 to 150 m²/g, in particular 50 to 100 m²/g.

9. The use according to any one of the preceding claims, wherein the amount of carbon black is 0.2 to 12.0 wt.%, preferably 0.5 to 9.0 wt.%, more preferred 1.0 to 8.0 wt.%, such as 2.0 to 7.0 wt.%, in particular 3.0 to 6.0 wt.%, such as about 5.0 wt.%, based on the weight of the polymer.

10. The use according to any one of the preceding claims, wherein the combination further comprises
c) nanoparticles of metal oxide, the nanoparticles having a 90% particle size of less than 100 nm (on the basis of a BET standard measurement),
wherein the metal oxide is preferably zinc oxide, magnesium oxide, or a mixture thereof, more preferably wherein the metal oxide is zinc oxide.

11. The use according to any one of the preceding claims, wherein the vinyl aromatic monomer is styrene and the comonomer is a sterically hindered styrene (preferably p-tert-butylstyrene), preferably wherein the styrene-based copolymer comprises up to 99 wt.% of p-tert-butylstyrene comonomer, more preferably 2-50 wt.% of p-tert-butylstyrene comonomer, in particular 5-25 wt.% of p-tert-butylstyrene comonomer.

12. Compounded masterbatch for the preparation of expandable polymer granulates, the masterbatch comprising
i)
a) calcium phosphate, and optionally silica,
b) carbon black, and optionally c) nanoparticles of a metal oxide, the nanoparticles having a 90% particle size of less than 100 nm (on the basis of a BET standard measurement), and preferably of less than 50 nm,
ii) styrene homo- or copolymer, and
optionally iii) styrene monomer,
wherein the total amount of component i) in the masterbatch is 10 to 60 wt.%, and wherein component i) has been coated with one or more silanes during compounding of the masterbatch, and
wherein
a1) the silica is amorphous and has
- a BET surface, as measured according to the description, of 3 to 80 m²/g,
- a particle size distribution, as measured according to the description, within the range of from 3 nm to 1,000 nm,
a2) the calcium phosphate has a particle size, as measured by laser diffraction, of 0.1 µm to 20 µm, and
b) the carbon black has
- a BET surface, as measured according to ASTM 6556, of more than 40 up to 250 m²/g, and
- a sulphur content in the range of from 50 to 20,000 ppm, as measured according to ASTM D 1619.

13. Process for the preparation of expandable polymer granulates comprising the following steps:
i) feeding vinyl aromatic polymer or copolymer into an extruder,
ii) adding a) calcium phosphate, and optionally silica, and b) carbon black, and optionally thermal stabiliser and flame suppressant,
iii) injecting blowing agent into the melt of polymer or copolymer,
iv) extruding the homogenous blend, and
v) pelletizing the blend in an underwater pelletizer, so as to obtain the granulate,
wherein
a1) the silica is amorphous and has
- a BET surface, as measured according to the description, of 3 to 80 m²/g,
- a particle size distribution, as measured according to the description, within the range of from 3 to 1,000 nm, and the silica, if used, is present in an amount of 0.1 to less than 2 wt.%, based on the weight of the polymer,
a2) the calcium phosphate has a particle size, as measured by laser diffraction, of 0.1 µm to 20 µm, and
the calcium phosphate is present in an amount of 0.1 to 10 wt.%, based on the weight of polymer, and
b) the carbon black has
- a BET surface, as measured according to ASTM 6556, of more than 40 up to 250 m²/g, and
- a sulphur content in the range of from 50 to 20,000 ppm, as measured according to ASTM D 1619, and
the carbon black is present in an amount of 0.1 to 12 wt.%, based on the weight of the polymer.

14. Process for the preparation of expandable polymer granulates comprising the following steps:
i) providing a mixture comprising
i1) at least one suspending agent which is an inorganic acid salt,
i2) at least one suspension stabilizer selected from the group of anionic surface active compounds and/or high molecular weight compounds, and
i3) water,
ii) adding a vinyl aromatic monomer and optionally one or more comonomers to the mixture, and subsequently adding
ii1) optional polymeric suspension aid,
ii2) athermanous filler,
ii3) flame retardant,
ii4) flame suppressor, and
ii5) at least one peroxide as reaction initiator, and
then polymerizing the monomer and optional comonomers in the suspension phase,
iii) continuing the polymerization,
iv) adding blowing agent during or after the polymerization step,
v) cooling, and then separating the granulate from the water,
wherein a) calcium phosphate, and optionally silica, and b) carbon black are introduced in step ii) and/or step iii), and
wherein
a1) the silica is amorphous and has
- a BET surface, as measured according to the description, of 3 to 80 m²/g,
- a particle size distribution, as measured according to the description, within the range of from 3 to 1,000 nm, and the silica, if used, is present in an amount of 0.1 to less than 2 wt.%, based on the weight of the polymer,
a2) the calcium phosphate has a particle size, as measured by laser diffraction, of 0.1 µm to 20 µm, and
the calcium phosphate is present in an amount of 0.1 to 10 wt.%, based on the weight of polymer, and
b) the carbon black has
- a BET surface, as measured according to ASTM 6556, of more than 40 up to 250 m²/g, and
- a sulphur content in the range of from 50 to 20,000 ppm, as measured according to ASTM D 1619, and
the carbon black is present in an amount of 0.1 to 12 wt.%, based on the weight of the polymer.

15. Process for the preparation of expandable polymer granulate comprising the following steps:
i) providing continuously to a mass prepolymerization reactor (or the first from a cascade reactor) a stream of:
i1) vinyl aromatic monomer and optionally at least one comonomer (preferably p-tert-butylstyrene),
i2) at least one additive solution, and
i3) optionally recycled monomer,
ii) continuing polymerization in the prepolymerization reactor or the sequence of cascade reactors,
iii) addition of athermanous fillers: a) calcium phosphate, and optionally silica, and b) carbon black with or without nano metal oxide, and optionally further additives, preferably flame suppressant,
iv) degassing the polymer,
v) feeding the polymer in molten state into the extruder, preferably directly from the polymerization plant,
vi) optionally adding a flame retardant system including synergist and thermal stabilisers,
vii) injecting the blowing agent,
viii) extruding the homogenous polymer blend, and
ix) pelletizing in an underwater pelletizer, so as to obtain the granulate,
wherein
a1) the silica is amorphous and has
- a BET surface, as measured according to the description, of 3 to 80 m²/g,
- a particle size distribution, as measured according to the description, within the range of from 3 nm to 1,000 nm, and the silica, if used, is present in an amount of 0.1 to less than 2 wt.%, based on the weight of the,
a2) the calcium phosphate has a particle size, as measured by laser diffraction, of 0.1 µm to 20 µm, and
the calcium phosphate is present in an amount of 0.1 to 10 wt.%, based on the weight of polymer, and
b) the carbon black has
- a BET surface, as measured according to ASTM 6556, of more than 40 up to 250 m²/g, and
- a sulphur content in the range of from 50 to 20,000 ppm, as measured according to ASTM D 1619, and
the carbon black is present in an amount of 0.1 to 12 wt.%, based on the weight of the polymer.

16. Expandable polymer granulate comprising:
a) calcium phosphate, and optionally silica,
b) carbon black,
c) polymer of vinyl aromatic monomer and optionally one or more comonomers, and
d) blowing agent
wherein
a1) the silica is amorphous and has
- a BET surface, as measured according to the description, of 3 to 80 m²/g,
- a particle size distribution, as measured according to the description, within the range of from 3 nm to 1,000 nm, and the silica, if used, is present in an amount of 0.1 to less than 2 wt.%, based on the weight of the polymer,
a2) the calcium phosphate has a particle size, as measured by laser diffraction, of 0.1 µm to 20 µm, and
the calcium phosphate is present in an amount of 0.1 to 10 wt.%, based on the weight of polymer, and
b) the carbon black has
- a BET surface, as measured according to ASTM 6556, of more than 40 up to 250 m²/g, and
- a sulphur content in the range of from 50 to 20,000 ppm, as measured according to ASTM D 1619, and
the carbon black is present in an amount of 0.1 to 12 wt.%, based on the weight of the polymer; wherein the expandable polymer granulate is obtainable by the process according to any one of claims 13 to 15;
preferably wherein the expandable polymer granulate further comprises one or more additives selected from graphite, petroleum coke, graphitized carbon black, graphite oxides, and graphene.

17. Expanded polymer foam comprising
a) calcium phosphate, and optionally silica,
b) carbon black, and
c) polymer of vinyl aromatic monomer and optionally one or more comonomers,
wherein
a1) the silica is amorphous and has
- a BET surface, as measured according to the description, of 3 to 80 m²/g,
- a particle size distribution, as measured according to the description, within the range of from 3 nm to 1,000 nm, and the silica, if used, is present in an amount of 0.1 to less than 2 wt.%, based on the weight of the polymer,
a2) the calcium phosphate has a particle size, as measured by laser diffraction, of 0.1 µm to 20 µm, and the calcium phosphate is present in an amount of 0.1 to 10 wt.%, based on the weight of polymer, and
b) the carbon black has
- a BET surface, as measured according to ASTM 6556, of more than 40 up to 250 m²/g, and
- a sulphur content in the range of from 50 to 20,000 ppm, as measured according to ASTM D 1619, and
the carbon black is present in an amount of 0.1 to 12 wt.%, based on the weight of the polymer,
the foam having
- a density of 10 to 30 kg/m³, and
- a thermal conductivity of 25 - 35 mW/K·m;
wherein the foam is obtainable by expansion of the expandable polymer granulate according to claim 16.

## Patentansprüche

1. Verwendung von
a) Kalziumphosphat und gegebenenfalls Siliciumdioxid in Kombination mit
b) Ruß zur Verminderung der Wärmeleitfähigkeit von Schäumen, die aus Polymer basierend auf vinylaromatischem Monomer und gegebenenfalls einem oder mehreren Comonomeren hergestellt sind,
wobei
a1) das Siliciumdioxid amorph ist und besitzt
- eine BET-Oberfläche, gemessen gemäß der Beschreibung, von 3 bis 80 m²/g,
- eine Teilchengrößenverteilung, gemessen gemäß der Beschreibung, im Bereich von 3 nm bis 1000 nm, und
das Siliciumdioxid, wenn es verwendet wird, in einer Menge von 0,1 bis weniger als 2 Gew.-% vorhanden ist, bezogen auf das Gewicht des Polymers,
a2) das Kalziumphosphat eine Teilchengröße, gemessen durch Laserstreuung, von 0,1 µm bis 20 µm besitzt, und
das Kalziumphosphat in einer Menge von 0,1 bis 10 Gew.-% vorhanden ist, vorhanden auf das Gewicht des Polymers, und
b) der Ruß besitzt
- eine BET-Oberfläche, gemessen gemäß ASTM 6556, von mehr als 40 bis 250 m²/g, und
- einen Schwefelgehalt im Bereich von 50 bis 20.000 ppm, gemessen gemäß ASTM D 1619, und
der Ruß in einer Menge von 0,1 bis 12 Gew.-% vorhanden ist, bezogen auf das Gewicht des Polymers.

2. Verwendung nach Anspruch 1, wobei das Siliciumdioxid eine BET-Oberfläche, gemessen gemäß der Beschreibung, von 3 bis 80 m²/g besitzt, vorzugsweise 5 bis 70 m²/g, bevorzugter 8 bis 60 m²/g, wie 10 bis 50 m²/g, insbesondere 15 bis 40 m²/g, insbesondere 20 bis 30 m²/g, wie etwa 25 m²/g.

3. Verwendung nach Anspruch 1 oder Anspruch 2, wobei das Siliciumdioxid eine Teilchengrößenverteilung, gemessen gemäß der Beschreibung, im Bereich von 3 bis 1.000 nm besitzt, vorzugsweise 20 bis 800 nm, bevorzugter 30 bis 600 nm, wie 40 bis 400 nm.

4. Verwendung nach einem der vorhergehenden Ansprüche, wobei die Menge von Siliciumdioxid 0,5 bis 1,6 Gew.-% beträgt, vorzugsweise 0,7 bis 1,3 Gew.-%, bevorzugter etwa 1,0 Gew.-%, bezogen auf das Gewicht des Polymers.

5. Verwendung nach einem der vorhergehenden Ansprüche, wobei das Kalziumphosphat eine Teilchengröße, gemessen durch Laserstreuung, von 1 µm bis 18 µm besitzt, vorzugsweise 2 µm bis 15 µm.

6. Verwendung nach einem der vorhergehenden Ansprüche, wobei die Menge von Kalziumphosphat 0,5 bis 10 Gew.-% beträgt, vorzugsweise 1 bis 5 Gew.-%, bezogen auf das Gewicht des Polymers.

7. Verwendung nach einem der vorhergehenden Ansprüche, wobei das Kalziumphosphat Trikalziumphosphat ist.

8. Verwendung nach einem der vorhergehenden Ansprüche, wobei der Ruß eine BET-Oberfläche, gemessen gemäß ASTM 6556, von 41 bis 200 m²/g besitzt, vorzugsweise 45 bis 150 m²/g, insbesondere 50 bis 100 m²/g.

9. Verwendung nach einem der vorhergehenden Ansprüche, wobei die Menge von Ruß 0,2 bis 12,0 Gew.-% beträgt, vorzugsweise 0,5 bis 9,0 Gew.-%, bevorzugter 1,0 bis 8,0 Gew.-%, wie 2,0 bis 7,0 Gew.-%, insbesondere 3,0 bis 6,0 Gew.-%, wie etwa 5,0 Gew.-%, bezogen auf das Gewicht des Polymers.

10. Verwendung nach einem der vorhergehenden Ansprüche, wobei die Kombination ferner umfasst,
c) Nanopartikel von Metalloxid, wobei die Nanopartikel eine 90%-Teilchengröße von weniger als 100 nm besitzen (basierend auf einer BET-Standardmessung),
wobei das Metalloxid vorzugsweise Zinkoxid, Magnesiumoxid oder eine Mischung davon ist, bevorzugter wobei das Metalloxid Zinkoxid ist.

11. Verwendung nach einem der vorhergehenden Ansprüche, wobei das vinylaromatische Monomer Styrol ist und das Comonomer sterisch gehindertes Styrol (vorzugsweise p-Tert.-Butylstyrol) ist, vorzugsweise wobei das Styrol-basierte Copolymer bis 99 Gew.-% p-Tert.-Butylstyrol-Comonomer umfasst, bevorzugter 2 - 50 Gew.-% p-Tert.-Butylstryrol-Comonomer, insbesondere 5 - 25 Gew.-% p-Tert.-Butylstyrol-Comonomer.

12. Compoundiertes Masterbatch zur Herstellung von expandierbaren Polymergranulaten, wobei das Masterbatch umfasst
i)
a) Kalziumphosphat und gegebenenfalls Siliciumdioxid,
b) Ruß und
gegebenenfalls c) Nanopartikel von Metalloxid, wobei die Nanopartikel eine 90%-Teilchengröße von weniger als 100 nm besitzen (basierend auf der Basis einer BET-Standardmessung), vorzugsweise weniger als 50 nm,
ii) Styrolhomo- oder -copolymer, und
gegebenenfalls iii) Styrolmonomer,
wobei die Gesamtmenge von Komponente i) in dem Masterbatch 10 bis 60 Gew.-% beträgt, und wobei Komponente i) beim Compoundieren des Masterbatch mit einem oder mehreren Silanen beschichtet worden ist, und
wobei
a1) das Siliciumdioxid amorph ist und besitzt
- eine BET-Oberfläche, gemessen gemäß der Beschreibung, von 3 bis 80 m²/g,
- eine Teilchengrößenverteilung, gemessen gemäß der Beschreibung, im Bereich von 3 nm bis 1000 nm, und
das Siliciumdioxid, wenn es verwendet wird, in einer Menge von 0,1 bis weniger als 2 Gew.-% vorhanden ist, bezogen auf das Gewicht des Polymers,
a2) das Kalziumphosphat eine Teilchengröße, gemessen durch Laserstreuung, von 0,1 µm bis 20 µm besitzt, und
das Kalziumphosphat in einer Menge von 0,1 bis 10 Gew.-% vorhanden ist, vorhanden auf das Gewicht des Polymers, und
b) der Ruß besitzt
- eine BET-Oberfläche, gemessen gemäß ASTM 6556, von mehr als 40 bis 250 m²/g, und
- einen Schwefelgehalt im Bereich von 50 bis 20.000 ppm, gemessen gemäß ASTM D 1619.

13. Verfahren zur Herstellung von expandierbaren Polymergranulaten, mit den folgenden Schritten:
i) Einspeisen von vinylaromatischem Polymer oder Copolymer in einen Extruder,
ii) Zugabe von a) Kalziumphosphat und gegebenenfalls Siliciumdioxid, und b) Ruß, und gegebenenfalls thermischem Stabilisator und Flammunterdrückungsmittel,
iii) Zugeben von Treibmittel in die Schmelze von Polymer oder Copolymer,
iv) Extrudieren des homogenen Gemischs und
v) Pelletieren des Gemischs in einer Unterwasser-Pelletiervorrichtung, um so das Granulat zu erhalten,
wobei
a1) das Siliciumdioxid amorph ist und besitzt
- eine BET-Oberfläche, gemessen gemäß der Beschreibung, von 3 bis 80 m²/g,
- eine Teilchengrößenverteilung, gemessen gemäß der Beschreibung, im Bereich von 3 nm bis 1000 nm, und
das Siliciumdioxid, wenn es verwendet wird, in einer Menge von 0,1 bis weniger als 2 Gew.-% vorhanden ist, bezogen auf das Gewicht des Polymers,
a2) das Kalziumphosphat eine Teilchengröße, gemessen durch Laserstreuung, von 0,1 µm bis 20 µm besitzt, und das Kalziumphosphat in einer Menge von 0,1 bis 10 Gew.-% vorhanden ist, vorhanden auf das Gewicht des Polymers, und
b) der Ruß besitzt
- eine BET-Oberfläche, gemessen gemäß ASTM 6556, von mehr als 40 bis 250 m²/g, und
- einen Schwefelgehalt im Bereich von 50 bis 20.000 ppm, gemessen gemäß ASTM D 1619, und
der Ruß in einer Menge von 0,1 bis 12 Gew.-% vorhanden ist, bezogen auf das Gewicht des Polymers.

14. Verfahren zur Herstellung von expandierbaren Polymergranulaten mit den folgenden Schritten:
i) Bereitstellen einer Mischung, die umfasst
i1) mindestens ein Suspendiermittel, das ein Salz von anorganischer Säure ist,
i2) mindestens einen Suspensionsstabilisator, der ausgewählt ist aus der Gruppe von anionischen oberflächenaktiven Verbindungen und/oder Verbindungen mit hohem Molekulargewicht, und
i3) Wasser,
ii) Zugabe von vinylaromatischem Monomer und gegebenenfalls einem oder mehreren Comonomeren zu der Mischung, und nachfolgend Zugabe von
ii1) optionalem polymeren Suspensionshilfsmittel,
ii2) athermanem Füllstoff,
ii3) Flammverzögerer,
ii4) Flammunterdrückungsmittel und
ii5) mindestens einem Peroxid als Reaktionsinitiator und
dann Polymerisieren des Monomers und gegebenenfalls Comonomeren in der Suspensionsphase,
iii) Fortsetzen der Polymerisation,
iv) Zugabe des Treibmittels während des oder nach dem Polymerisationsschritt,
v) Abkühlen und dann Abtrennen des Granulats von dem Wasser, wobei a) Kalziumphosphat und gegebenenfalls Siliciumdioxid und b) Ruß in Schritt ii) und/oder Schritt iii) zugegeben werden und
wobei
a1) das Siliciumdioxid amorph ist und besitzt
- eine BET-Oberfläche, gemessen gemäß der Beschreibung, von 3 bis 80 m²/g,
- eine Teilchengrößenverteilung, gemessen gemäß der Beschreibung, im Bereich von 3 nm bis 1000 nm, und
das Siliciumdioxid, wenn es verwendet wird, in einer Menge von 0,1 bis weniger als 2 Gew.-% vorhanden ist, bezogen auf das Gewicht des Polymers,
a2) das Kalziumphosphat eine Teilchengröße, gemessen durch Laserstreuung, von 0,1 µm bis 20 µm besitzt, und
das Kalziumphosphat in einer Menge von 0,1 bis 10 Gew.-% vorhanden ist, vorhanden auf das Gewicht des Polymers, und
b) der Ruß besitzt
- eine BET-Oberfläche, gemessen gemäß ASTM 6556, von mehr als 40 bis 250 m²/g, und
- einen Schwefelgehalt im Bereich von 50 bis 20.000 ppm, gemessen gemäß ASTM D 1619, und
der Ruß in einer Menge von 0,1 bis 12 Gew.-% vorhanden ist, bezogen auf das Gewicht des Polymers.

15. Verfahren zur Herstellung von expandierbarem Polymergranulat, mit den folgenden Schritten:
i) Kontinuierliches Bereitstellen, in einen Massenpräpolymerisationsreaktor (oder den ersten von einem Kaskaden-Reaktor) eines Stroms von:
i1) vinylaromatischem Monomer und gegebenenfalls einem oder mehreren Comonomeren (vorzugsweise p-Tert.-Butylstyrol),
i2) mindestens einer Additivlösung und
i3) gegebenenfalls rückgeführtem Monomer,
ii) Fortsetzen der Polymerisation in dem Präpolymerisationsreaktor oder der Reihe von Kaskaden-Reaktoren),
iii) Zugabe von athermanen Füllstoffen: a) Kalziumphosphat und gegebenenfalls Siliciumdioxid und b) Ruß mit oder ohne Metalloxid, und gegebenenfalls weiteren Additiven, vorzugsweise Flammunterdrückungsmittel,
iv) Entgasen des Polymers,
v) Einspeisen des Polymers im geschmolzenen Zustand in den Extruder, vorzugsweise direkt aus der Polymerisationsanlage,
vi) gegebenenfalls Zugabe eines Flammverzögerungssystems, einschließlich synergistischer Verbindung und thermischen Stabilisatoren,
vii) Zugabe des Treibmittels,
viii) Extrudieren des homogenen Polymergemischs und
ix) Pelletieren in einer Unterwasser-Pelletiervorrichtung, um so das Granulat zu erhalten, wobei
a1) das Siliciumdioxid amorph ist und besitzt
- eine BET-Oberfläche, gemessen gemäß der Beschreibung, von 3 bis 80 m²/g,
- eine Teilchengrößenverteilung, gemessen gemäß der Beschreibung, im Bereich von 3 nm bis 1000 nm, und
das Siliciumdioxid, wenn es verwendet wird, in einer Menge von 0,1 bis weniger als 2 Gew.-% vorhanden ist, bezogen auf das Gewicht des Polymers,
a2) das Kalziumphosphat eine Teilchengröße, gemessen durch Laserstreuung, von 0,1 µm bis 20 µm besitzt, und
das Kalziumphosphat in einer Menge von 0,1 bis 10 Gew.-% vorhanden ist, vorhanden auf das Gewicht des Polymers, und
b) der Ruß besitzt
- eine BET-Oberfläche, gemessen gemäß ASTM 6556, von mehr als 40 bis 250 m²/g, und
- einen Schwefelgehalt im Bereich von 50 bis 20.000 ppm, gemessen gemäß ASTM D 1619, und
der Ruß in einer Menge von 0,1 bis 12 Gew.-% vorhanden ist, bezogen auf das Gewicht des Polymers.

16. Expandierbares Polymergranulat, das umfasst:
a) Kalziumphosphat und gegebenenfalls Siliciumdioxid,
b) Ruß,
c) Polymer von vinylaromatischem Monomer und gegebenenfalls einem oder mehreren Comonomeren und
d) Treibmittel,
wobei
a1) das Siliciumdioxid amorph ist und besitzt
- eine BET-Oberfläche, gemessen gemäß der Beschreibung, von 3 bis 80 m²/g,
- eine Teilchengrößenverteilung, gemessen gemäß der Beschreibung, im Bereich von 3 nm bis 1000 nm, und
das Siliciumdioxid, wenn es verwendet wird, in einer Menge von 0,1 bis weniger als 2 Gew.-% vorhanden ist, bezogen auf das Gewicht des Polymers,
a2) das Kalziumphosphat eine Teilchengröße, gemessen durch Laserstreuung, von 0,1 µm bis 20 µm besitzt, und
das Kalziumphosphat in einer Menge von 0,1 bis 10 Gew.-% vorhanden ist, vorhanden auf das Gewicht des Polymers, und
b) der Ruß besitzt
- eine BET-Oberfläche, gemessen gemäß ASTM 6556, von mehr als 40 bis 250 m²/g, und
- einen Schwefelgehalt im Bereich von 50 bis 20.000 ppm, gemessen gemäß ASTM D 1619, und
der Ruß in einer Menge von 0,1 bis 12 Gew.-% vorhanden ist, bezogen auf das Gewicht des Polymers;
wobei das expandierbare Polymergranulat erhältlich ist gemäß dem Verfahren eines der Ansprüche 13 bis 15;
wobei das expandierbare Polymergranulat vorzugsweise ferner einen oder mehrere Additive ausgewählt aus Graphit, Petrolkoks, graphitiertem Ruß, Graphitoxiden und
Graphen umfasst.

17. Expandierbarer Polymerschaum, der umfasst
a) Kalziumphosphat und gegebenenfalls Siliciumdioxid,
b) Ruß und
c) Polymer von vinylaromatischem Monomer und gegebenenfalls einem oder mehreren Comonomeren,
wobei
a1) das Siliciumdioxid amorph ist und besitzt
- eine BET-Oberfläche, gemessen gemäß der Beschreibung, von 3 bis 80 m²/g,
- eine Teilchengrößenverteilung, gemessen gemäß der Beschreibung, im Bereich von 3 nm bis 1000 nm, und
das Siliciumdioxid, wenn es verwendet wird, in einer Menge von 0,1 bis weniger als 2 Gew.-% vorhanden ist, bezogen auf das Gewicht des Polymers,
a2) das Kalziumphosphat eine Teilchengröße, gemessen durch Laserstreuung, von 0,1 µm bis 20 µm besitzt, und
das Kalziumphosphat in einer Menge von 0,1 bis 10 Gew.-% vorhanden ist, vorhanden auf das Gewicht des Polymers, und
b) der Ruß besitzt
- eine BET-Oberfläche, gemessen gemäß ASTM 6556, von mehr als 40 bis 250 m²/g, und
- einen Schwefelgehalt im Bereich von 50 bis 20.000 ppm, gemessen gemäß ASTM D 1619, und
der Ruß in einer Menge von 0,1 bis 12 Gew.-% vorhanden ist, bezogen auf das Gewicht des Polymers,
wobei der Schaum besitzt
- eine Dichte von 10 bis 30 kg/m³ und
- eine Wärmeleitfähigkeit von 25 - 35 mW/K·m;
wobei der Schaum erhältlich ist durch Expansion des expandierbaren Polymergranulats gemäß Anspruch 16.

## Revendications

1. Utilisation de
(a) phosphate de calcium, et facultativement de silice, en combinaison avec
(b) du noir de carbone
pour diminuer la conductivité thermique de mousses préparées à partir d'un polymère basé sur un monomère vinylique aromatique et facultativement un ou plusieurs comonomères,
dans laquelle
a1) la silice est amorphe et présente
- une surface spécifique BET, telle que mesurée selon la description, de 3 à 80 m²/g,
- une distribution granulométrique, telle que mesurée selon la description, dans la plage de 3 nm à 1000 nm, et
la silice, si elle est utilisée, est présente en une quantité de 0,1 à moins de 2 % en poids, sur la base du poids du polymère,
a2) le phosphate de calcium présente une taille de particule, telle que mesurée par diffraction laser, de 0,1 µm à 20 µm, et
le phosphate de calcium est présent en une quantité de 0,1 à 10 % en poids, sur la base du poids de polymère, et
b) le noir de carbone présente
- une surface spécifique BET, telle que mesurée selon ASTM 6556, de plus de 40 jusqu'à 250 m²/g, et
- une teneur en soufre dans la plage de 50 à 20 000 ppm, telle que mesurée selon ASTM D 1619, et
le noir de carbone est présent en une quantité de 0,1 à 12 % en poids, sur la base du poids du polymère.

2. Utilisation selon la revendication 1, dans laquelle la silice présente une surface spécifique BET, telle que mesurée selon la description, de 3 à 80 m²/g, de préférence de 5 à 70 m²/g, plus préférentiellement de 8 à 60 m²/g, par exemple de 10 à 50 m²/g, en particulier de 15 à 40 m²/g, en particulier de 20 à 30 m²/g, par exemple environ 25 m²/g.

3. Utilisation selon la revendication 1 ou la revendication 2, dans laquelle la silice présente une distribution granulométrique, telle que mesurée selon la description, dans la plage de 3 à 1000 nm, de préférence de 20 à 800 nm, plus préférentiellement de 30 à 600 nm, par exemple de 40 à 400 nm.

4. Utilisation selon l'une quelconque des revendications précédentes, dans laquelle la quantité de silice est de 0,5 à 1,6 % en poids, de préférence de 0,7 à 1,3 % en poids, plus préférentiellement d'environ 1,0 % en poids, sur la base du poids du polymère.

5. Utilisation selon l'une quelconque des revendications précédentes, dans laquelle le phosphate de calcium présente une taille de particule, telle que mesurée par diffraction laser, de 1 µm à 18 µm, de préférence de 2 µm à 15 µm.

6. Utilisation selon l'une quelconque des revendications précédentes, dans laquelle la quantité de phosphate de calcium est de 0,5 à 10 % en poids, de préférence de 1 à 5 % en poids, sur la base du poids de polymère.

7. Utilisation selon l'une quelconque des revendications précédentes, dans laquelle le phosphate de calcium est du phosphate tricalcique.

8. Utilisation selon l'une quelconque des revendications précédentes, dans laquelle le noir de carbone présente une surface spécifique BET, telle que mesurée selon ASTM 6556, de 41 à 200 m²/g, de préférence de 45 à 150 m²/g, en particulier de 50 à 100 m²/g.

9. Utilisation selon l'une quelconque des revendications précédentes, dans laquelle la quantité de noir de carbone est de 0,2 à 12,0 % en poids, de préférence de 0,5 à 9,0 % en poids, plus préférentiellement de 1,0 à 8,0 % en poids, par exemple de 2,0 à 7,0 % en poids, en particulier de 3,0 à 6,0 % en poids, par exemple environ 5,0 % en poids, sur la base du poids du polymère.

10. Utilisation selon l'une quelconque des revendications précédentes, dans laquelle la combinaison comprend en outre
c) des nanoparticules d'oxyde de métal, les nanoparticules présentant une taille de particule à 90 % de moins de 100 nm (sur la base d'une mesure standard BET),
dans laquelle l'oxyde de métal est de préférence l'oxyde de zinc, l'oxyde de magnésium, ou un mélange de ceux-ci, plus préférentiellement dans laquelle l'oxyde de métal est l'oxyde de zinc.

11. Utilisation selon l'une quelconque des revendications précédentes, dans laquelle le monomère vinylique aromatique est le styrène et le comonomère est un styrène stériquement empêché (de préférence le p-tert-butylstyrène), de préférence dans laquelle le copolymère à base de styrène comprend jusqu'à 99 % en poids de comonomère de p-tert-butylstyrène, plus préférentiellement de 2 à 50 % en poids de comonomère de p-tert-butylstyrène, en particulier de 5 à 25 % en poids de comonomère de p-tert-butylstyrène.

12. Mélange-maître composé pour la préparation de granulés de polymère expansible, le mélange-maître comprenant
i)
a) du phosphate de calcium, et facultativement de la silice,
b) du noir de carbone, et
facultativement c) des nanoparticules d'un oxyde de métal, les nanoparticules présentant une taille de particule à 90 % de moins de 100 nm (sur la base d'une mesure standard BET), et de préférence de moins de 50 nm,
ii) un homo- ou copolymère de styrène, et facultativement iii) un monomère de styrène, dans lequel la quantité totale de composant i) dans le mélange-maître est de 10 à 60 % en poids, et dans lequel le composant i) a été enrobé d'un ou plusieurs silanes pendant la composition du mélange-maître, et
dans lequel
a1) la silice est amorphe et présente
- une surface spécifique BET, telle que mesurée selon la description, de 3 à 80 m²/g,
- une distribution granulométrique, telle que mesurée selon la description, dans la plage de 3 nm à 1000 nm,
a2) le phosphate de calcium présente une taille de particule, telle que mesurée par diffraction laser, de 0,1 µm à 20 µm, et
b) le noir de carbone présente
- une surface spécifique BET, telle que mesurée selon ASTM 6556, de plus de 40 jusqu'à 250 m²/g, et
- une teneur en soufre dans la plage de 50 à 20 000 ppm, telle que mesurée selon ASTM D 1619.

13. Procédé pour la préparation de granulés de polymère expansible comprenant les étapes suivantes :
i) alimenter une extrudeuse avec un polymère ou copolymère vinylique aromatique,
ii) ajouter a) du phosphate de calcium, et facultativement de la silice, et b) du noir de carbone, et facultativement un stabilisateur thermique et un inhibiteur de flamme,
iii) injecter un agent gonflant dans la fusion de polymère ou copolymère,
iv) extruder le mélange homogène, et
v) granuler le mélange dans un granulateur immergé, de façon à obtenir le granulé,
dans lequel
a1) la silice est amorphe et présente
- une surface spécifique BET, telle que mesurée selon la description, de 3 à 80 m²/g,
- une distribution granulométrique, telle que mesurée selon la description, dans la plage de 3 à 1000 nm, et
la silice, si elle est utilisée, est présente en une quantité de 0,1 à moins de 2 % en poids, sur la base du poids du polymère,
a2) le phosphate de calcium présente une taille de particule, telle que mesurée par diffraction laser, de 0,1 µm à 20 µm, et
le phosphate de calcium est présent en une quantité de 0,1 à 10 % en poids, sur la base du poids de polymère, et
b) le noir de carbone présente
- une surface spécifique BET, telle que mesurée selon ASTM 6556, de plus de 40 jusqu'à 250 m²/g, et
- une teneur en soufre dans la plage de 50 à 20 000 ppm, telle que mesurée selon ASTM D 1619, et
le noir de carbone est présent en une quantité de 0,1 à 12 % en poids, sur la base du poids du polymère.

14. Procédé pour la préparation de granulés de polymère expansible comprenant les étapes suivantes :
i) fournir un mélange comprenant
i1) au moins un agent de suspension qui est un sel d'acide inorganique,
i2) au moins un stabilisateur de suspension sélectionné dans le groupe des composés tensioactifs anioniques et/ou des composés à haut poids moléculaire, et
i3) de l'eau,
ii) ajouter un monomère vinylique aromatique et facultativement un ou plusieurs comonomères au mélange, et ajouter ensuite
ii1) un adjuvant de suspension polymère facultatif,
ii2) une charge athermane,
ii3) un ignifuge,
ii4) un inhibiteur de flamme, et
ii5) au moins un peroxyde en tant qu'initiateur de réaction, et ensuite polymériser le monomère et les comonomères facultatifs dans la phase de suspension,
iii) poursuivre la polymérisation,
iv) ajouter un agent gonflant pendant ou après l'étape de polymérisation,
v) refroidir, et ensuite séparer le granulé de l'eau,
dans lequel a) le phosphate de calcium, et facultativement la silice, et b) le noir de carbone sont introduits dans l'étape ii) et/ou l'étape iii), et
dans lequel
a1) la silice est amorphe et présente
- une surface spécifique BET, telle que mesurée selon la description, de 3 à 80 m²/g,
- une distribution granulométrique, telle que mesurée selon la description, dans la plage de 3 nm à 1000 nm, et
la silice, si elle est utilisée, est présente en une quantité de 0,1 à moins de 2 % en poids, sur la base du poids du polymère,
a2) le phosphate de calcium présente une taille de particule, telle que mesurée par diffraction laser, de 0,1 µm à 20 µm, et
le phosphate de calcium est présent en une quantité de 0,1 à 10 % en poids, sur la base du poids de polymère, et
b) le noir de carbone présente
- une surface spécifique BET, telle que mesurée selon ASTM 6556, de plus de 40 jusqu'à 250 m²/g, et
- une teneur en soufre dans la plage de 50 à 20 000 ppm, telle que mesurée selon ASTM D 1619, et
le noir de carbone est présent en une quantité de 0,1 à 12 % en poids, sur la base du poids du polymère.

15. Procédé de préparation de granulé de polymère expansible comprenant les étapes suivantes :
i) fournir de manière continue à un réacteur de prépolymérisation en masse (ou au premier d'un réacteur en cascade) un flux de :
i1) monomère vinylique aromatique et facultativement au moins un comonomère (de préférence du p-tert-butylstyrène),
i2) au moins une solution d'additif, et
i3) un monomère facultativement recyclé,
ii) poursuivre la polymérisation dans le réacteur de prépolymérisation ou la séquence de réacteurs en cascade,
iii) ajouter des charges athermanes : a) phosphate de calcium, et facultativement silice, et b) noir de carbone avec ou sans nano-oxyde de métal, et facultativement d'autres additifs, de préférence un inhibiteur de flamme,
iv) dégazer le polymère,
v) alimenter l'extrudeuse avec le polymère à l'état fondu, de préférence directement à partir de l'installation de polymérisation,
vi) ajouter facultativement un système d'ignifuge incluant des stabilisateurs synergistes et thermiques,
vii) injecter l'agent gonflant,
viii) extruder le mélange polymère homogène, et
ix) granuler dans un granulateur immergé, afin d'obtenir le granulé,
dans lequel
a1) la silice est amorphe et présente
- une surface spécifique BET, telle que mesurée selon la description, de 3 à 80 m²/g,
- une distribution granulométrique, telle que mesurée selon la description, dans la plage de 3 nm à 1000 nm, et
la silice, si elle est utilisée, est présente en une quantité de 0,1 à moins de 2 % en poids, sur la base du poids du polymère,
a2) le phosphate de calcium présente une taille de particule, telle que mesurée par diffraction laser, de 0,1 µm à 20 µm, et
le phosphate de calcium est présent en une quantité de 0,1 à 10 % en poids, sur la base du poids de polymère, et
b) le noir de carbone présente
- une surface spécifique BET, telle que mesurée selon ASTM 6556, de plus de 40 jusqu'à 250 m²/g, et
- une teneur en soufre dans la plage de 50 à 20 000 ppm, telle que mesurée selon ASTM D 1619, et
le noir de carbone est présent en une quantité de 0,1 à 12 % en poids, sur la base du poids du polymère.

16. Granulé polymère expansible comprenant :
a) du phosphate de calcium, et facultativement de la silice,
b) du noir de carbone,
c) un polymère de monomère vinylique aromatique et facultativement un ou plusieurs comonomères, et
d) un agent gonflant
dans lequel
a1) la silice est amorphe et présente
- une surface spécifique BET, telle que mesurée selon la description, de 3 à 80 m²/g,
- une distribution granulométrique, telle que mesurée selon la description, dans la plage de 3 nm à 1000 nm, et
la silice, si elle est utilisée, est présente en une quantité de 0,1 à moins de 2 % en poids, sur la base du poids du polymère,
a2) le phosphate de calcium présente une taille de particule, telle que mesurée par diffraction laser, de 0,1 µm à 20 µm, et
le phosphate de calcium est présent en une quantité de 0,1 à 10 % en poids, sur la base du poids de polymère, et
b) le noir de carbone présente
- une surface spécifique BET, telle que mesurée selon ASTM 6556, de plus de 40 jusqu'à 250 m²/g, et
- une teneur en soufre dans la plage de 50 à 20 000 ppm, telle que mesurée selon ASTM D 1619, et
le noir de carbone est présent en une quantité de 0,1 à 12 % en poids, sur la base du poids du polymère ;
dans lequel le granulé de polymère expansible peut être obtenu par le procédé selon l'une quelconque des revendications 13 à 15 ;
de préférence dans lequel le granulé de polymère expansible comprend en outre un ou plusieurs additifs sélectionnés parmi le graphite, le coke de pétrole, le noir de carbone graphité, les oxydes de graphite, et le graphène.

17. Mousse de polymère expansé comprenant
a) du phosphate de calcium, et facultativement de la silice,
b) du noir de carbone, et
c) un polymère de monomère vinylique aromatique et facultativement un ou plusieurs comonomères,
dans lequel
a1) la silice est amorphe et présente
- une surface spécifique BET, telle que mesurée selon la description, de 3 à 80 m²/g,
- une distribution granulométrique, telle que mesurée selon la description, dans la plage de 3 nm à 1000 nm, et
la silice, si elle est utilisée, est présente en une quantité de 0,1 à moins de 2 % en poids, sur la base du poids du polymère,
a2) le phosphate de calcium présente une taille de particule, telle que mesurée par diffraction laser, de 0,1 µm à 20 µm, et
le phosphate de calcium est présent en une quantité de 0,1 à 10 % en poids, sur la base du poids de polymère, et
b) le noir de carbone présente
- une surface spécifique BET, telle que mesurée selon ASTM 6556, de plus de 40 jusqu'à 250 m²/g, et
- une teneur en soufre dans la plage de 50 à 20 000 ppm, telle que mesurée selon ASTM D 1619, et
le noir de carbone est présent en une quantité de 0,1 à 12 % en poids, sur la base du poids du polymère,
la mousse présentant
- une densité de 10 à 30 kg/m³, et
- une conductivité thermique de 25 à 35 mW/K·m ; dans lequel la mousse peut être obtenue par expansion du granulé de polymère expansible selon la revendication 16.
